# DEMANDE DE BREVET EUROPEEN

(11) **EP 1 993 051 A1**
(43) Date de publication de la demande: **19.11.2008**
(21) Numéro de dépôt: 08156367.8
(22) Date de dépôt: 16.05.2008
(51) Int. Cl.: G06F 17/30

(54) **Composition automatisée de services Web**

(30) Priorité: 18.05.2007 FR 0755127
(71) Demandeur: FRANCE TELECOM, 75015 Paris (FR)
(72) Inventeur: Lecue, Freddy, 35000, Rennes (FR); Delteil, Alexandre, 92190, Meudon (FR)
(74) Mandataire: Lapoux, Roland

(57) **Abrégé**

Un service composé (Sg) ayant des entrées et sorties prédéterminées (Ig, Og) est composé automatiquement à partir d'un ensemble (SW) de services composants Web (Sₛ) mémorisé dans une base de données comprenant chacun au moins une entrée et au moins une sortie associées à des représentations textuelles. Le procédé de l'invention comprend une sélection (P6-P9) d'un service composant ayant des sorties correspondant sémantiquement à toutes les sorties prédéterminées, c'est-à-dire subsumées chacune par au moins une sortie prédéterminée, une sélection (P9-P11) d'un service composant ayant toutes les entrées subsumant sémantiquement des entrées prédéterminées, et une composition (P12, P14) du service composé avec les services composants sélectionnés.

## Description

La présente invention concerne une composition automatisée de service dans une plateforme.

Plus particulièrement, l'invention a trait à la composition d'un service Web souhaité par un client dans une plateforme, le service Web devant être composé à partir de services Web composants disponibles.

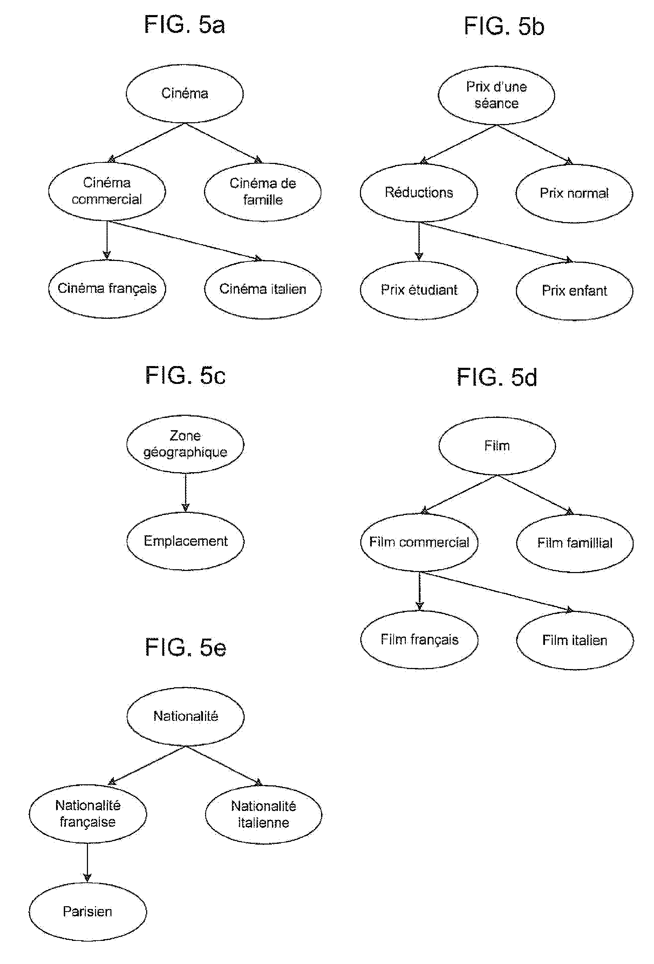

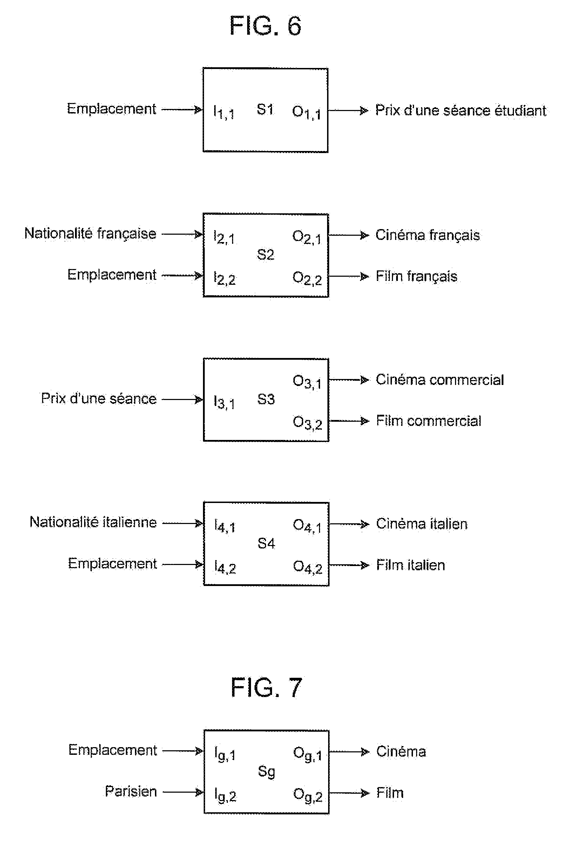

Un service Web, ou tout autre service, est considéré comme un processus accessible sur le Web nécessitant des entrées et fournissant des sorties dépendantes des entrées. Ces entrées et ces sorties sont annotées sémantiquement selon une spécification Web définie, telle que la spécification RDF ("Ressource Description Framework" en anglais), ou OWL ("Web Ontology Language" en anglais), afin d'être compréhensibles et accessibles à des dispositifs de traitement de ressources Web, tels que des serveurs ou des terminaux. En d'autres termes, les entrées et les sorties des services Web sont associées respectivement à des informations sémantiques telles que des concepts d'entrée et des concepts de sortie, un concept étant une représentation textuelle du sens d'un mot ou d'une séquence de mots. Un concept fait partie d'un ensemble de mots ou de séquence de mots représentant des caractéristiques significatives communes. Les concepts d'un même ensemble sont regroupés dans une ontologie et sont mis en relation selon une taxonomie particulière. Un domaine sémantique spécifique comprend une ou plusieurs ontologies. Des exemples de services Web dont les concepts d'entrée et de sortie sont mis en relation par des ontologies sont illustrés aux figures 5a à 5e et à la figure 6, et sont relatifs au domaine sémantique du cinéma.

La composition automatisée de services Web consiste à partir d'un ensemble de services Web existants et disponibles dont les entrées et les sorties sont annotées sémantiquement, de former un service plus spécifique et précis satisfaisant à des contraintes de compatibilité sémantique entre les services le composant.

Les efforts actuels dans le domaine de la composition automatisée de services Web portent essentiellement sur la correspondance entre les concepts d'entrée et les concepts de sortie des services disponibles. Les principales méthodes déterminent des compatibilités entre des services en fonction de la proximité sémantique des concepts de sortie d'un service aux concepts d'entrée d'autres services.

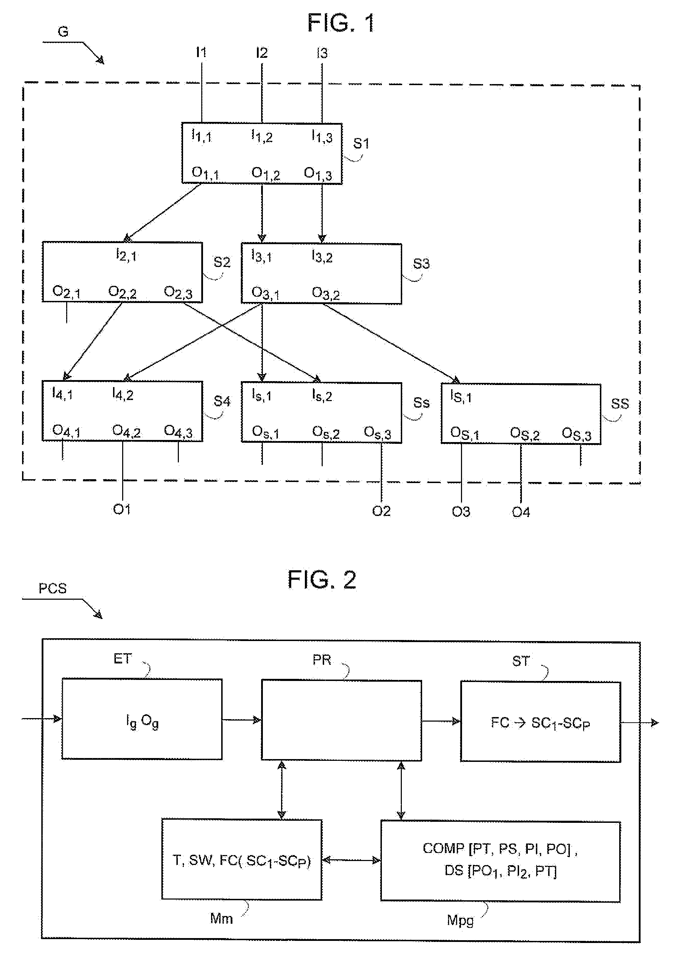

En référence à la figure 1, une technique connue de composition de service Web est de construire un graphe de services orienté et pondéré à partir d'une liste de services S_{S}, avec 1 ≤ s ≤ S. Les concepts d'entrée et de sortie concernent un domaine sémantique spécifique et sont mis en relation les uns avec les autres selon une ou des organisations hiérarchiques simples appelées taxonomies. Sur la figure 1, les concepts d'entrée et les concepts de sortie du graphe G correspondent respectivement aux entrées I1 à I3 et aux sorties 01 à 04 du service à composer. Dans un tel graphe, chaque service disponible S1 à S3 est assimilé à un noeud. Une arête est présente entre deux noeuds Ss et S3, si le concept d'entrée associé à une entrée, par exemple l'entrée I_{s,1}, du service Ss est sémantiquement proche du concept de sortie associé à une sortie, O_{3,1}, du service S3. Les concepts d'entrée d'un service peuvent correspondre à des concepts de sortie de services différents ; par exemple, le concept d'entrée associé à l'entrée I_{s,2} du service Sₛ correspond au concept de sortie associé à la sortie O_{2,3} du service S2. Chaque arête est étiquetée par une ou plusieurs variables de qualité de service telles que le temps, le coût, la fiabilité et/ou la confiance relatives à chacun des deux services reliés par l'arête, et par une variable de proximité de concept. La composition de service se ramène à rechercher le chemin le plus court dans le graphe G entre les entrées I1 à I3 et les sorties 01 à 04 relatives au service à composer.

Ce graphe peut être assimilé à une composition point à point faisant correspondre à chaque entrée d'un premier service une sortie d'un deuxième service sémantiquement proche du premier service. Un tel procédé connu de composition de service détermine toutes les proximités sémantiques possibles entre le concept d'une entrée d'un service et celui d'une sortie d'un autre service ce qui conduit à l'implémentation d'un algorithme complexe et coûteux du fait du nombre important de services mis en jeu et de leurs entrées et sorties.

En outre, les services proposés aux usagers par internet sont très volatiles et changeant. Intégrés en trop grand nombre dans une composition, ils rendent celle-ci rapidement inexploitable par un usager final.

En déterminant tous les services composés possibles y compris les plus complexes, le procédé connu de composition de service ne distingue pas les services composés les plus simples dans l'ensemble des services composés qu'il détermine.

La présente invention remédie aux inconvénients évoqués ci-dessus par un procédé pour composer automatiquement un service composé Web ayant des entrées et sorties prédéterminées à partir d'un ensemble de services composants Web mémorisé dans une base de données comprenant chacun au moins une entrée et au moins une sortie associées à des représentations textuelles, est caractérisé en ce qu'il comprend une sélection d'un service composant ayant des sorties correspondant sémantiquement à toutes les sorties prédéterminées, une sélection d'un service composant ayant toutes les entrées correspondant sémantiquement à des entrées prédéterminées, et une composition du service composé avec les services composants sélectionnés.

Selon une composition simple de service composé, le service composant sélectionné ayant des sorties correspondant sémantiquement à toutes les sorties prédéterminées peut être également celui ayant toutes les entrées correspondant sémantiquement à des entrées prédéterminées. Cependant en pratique, fréquemment, le service composant sélectionné ayant des sorties correspondant sémantiquement à toutes les sorties prédéterminées est distinct du service composant sélectionné ayant toutes les entrées correspondant sémantiquement à des entrées prédéterminées.

La correspondance sémantique est une subsomption entre des concepts définissant des entrées et des sorties de deux services au moins. En particulier, des sorties d'un service composant correspondent sémantiquement à toutes les sorties prédéterminées lorsque chacune desdites sorties du service composant sont subsumées par au moins l'une des sorties prédéterminées, et toutes les entrées d'un service composant correspondent sémantiquement à des entrées prédéterminées lorsque chacune desdites toutes les entrées du service composant subsume au moins l'une des entrées prédéterminées.

En général, le service composé comprend plus de deux services composants sélectionnés disponibles. La composition du service composé est alors une séquence ordonnée de plusieurs services composants sélectionnés parmi l'ensemble de services composants, toutes les entrées du premier service composant du service composé correspondant sémantiquement à des entrées prédéterminées du service composé, toutes les entrées de chacun des autres services composants du service composé correspondant sémantiquement à des sorties du service composant les précédant dans le service composé, et des sorties du dernier service composant du service composé correspondant sémantiquement à toutes les sorties prédéterminées du service composé.

Contrairement aux techniques connues établissant une composition point à point par une correspondance sémantiquement proche de chaque entrée d'un service à une sortie d'un autre service, le procédé selon l'invention a pour avantage d'établir un service composé avec un minimum de services composants Web disponibles par correspondance maximale de toutes les entrées d'un service à des sorties d'un autre service. En d'autres termes, toutes les entrées de chaque service composant du service composé correspondent sémantiquement à des sorties du service composant le précédant dans le service composé. Grâce aux correspondances sémantiques entre les ensembles de concept de sortie et d'entrée de services composants dans le service composé, le nombre de services composants servant à la composition d'un service composé selon l'invention est inférieur en général à celui pour la composition d'un service composé selon la technique antérieure ce qui réduit le risque de composer un service composé avec un nombre élevé de services par nature complexe et fortement inexploitable.

La correspondance sémantique entre deux services composants est une subsomption associant toutes les entrées d'un service composant à des sorties du service composant le précédant dans le service composé. En d'autres termes, toutes les entrées d'un service composant donné correspondent sémantiquement à des sorties d'un autre service composant le précédant dans le service composé lorsque chacune desdites toutes les entrées du service composant donné subsume au moins l'une des sorties de l'autre service composant. Un concept associé à une sortie est dit subsumé par un concept associé à une entrée, lorsque le concept d'entrée accepte une signification plus large que le concept de sortie. Les entrées/sorties des services peuvent appartenir à au moins une ontologie prédéfinie définissant des correspondances sémantiques.

De manière à mettre en oeuvre la correspondance sémantique entre des services composants successifs dans un service composé, la composition du service composé peut comprendre :
une sélection par boucle récursive de services composants, des sorties de chaque service composant sélectionné dans une récurrence croissante de la boucle récursive correspondant sémantiquement aux entrées du service composant sélectionné lors de la récurrence précédente de la boucle récursive, les sorties du premier service composant sélectionné correspondant sémantiquement aux sorties prédéterminées du service composé,
une composition du service composé lorsque les entrées du service composant sélectionné dans la dernière récurrence croissante de la boucle récursive correspondent sémantiquement à des entrées du service composé, et
une insertion par récurrence décroissante de la boucle récursive de chacun des services composants précédemment sélectionnés dans le service composé.

Pour un service composé donné, le procédé peut comprendre une composition de plusieurs services composés différents contenant chacun au moins un service composant, toutes les entrées de chaque service composé correspondant sémantiquement à des entrées prédéterminées et des sorties de chaque service composé correspondant sémantiquement à toutes les sorties prédéterminées.

L'invention a aussi pour objet une plateforme de composition automatique d'un service composé Web ayant des entrées et sorties prédéterminées à partir d'un ensemble de services composants Web mémorisé dans une base de données comprenant chacun au moins une entrée et au moins une sortie associées à des représentations textuelles. La plateforme est caractérisée en ce qu'elle comporte un moyen pour sélectionner un service composant ayant des sorties correspondant sémantiquement à toutes les sorties prédéterminées, un moyen pour sélectionner un service composant ayant toutes les entrées correspondant sémantiquement à des entrées prédéterminées, et un moyen pour composer le service composé avec les services composants sélectionnés.

Enfin, l'invention se rapporte à un programme d'ordinateur apte à être mis en oeuvre dans la plateforme de composition automatique d'un service composé Web ayant des entrées et sorties prédéterminées à partir d'un ensemble de services composants Web mémorisé dans une base de données comprenant chacun au moins une entrée et au moins une sortie associées à des représentations textuelles, ledit programme comprenant des instructions qui, lorsque le programme est exécuté dans la plateforme, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un graphe de services relatif à un procédé connu de composition de service ;
- la figure 2 est un bloc-diagramme schématique d'une plateforme de composition de service selon l'invention ;
- la figure 3 est un algorithme d'un procédé de recherche de correspondance sémantique entre deux services selon l'invention ;
- la figure 4 est un algorithme d'un procédé de composition de service selon l'invention ;
- les figures 5a à 5e sont des diagrammes de taxonomie illustrant un exemple d'application de l'invention ;
- la figure 6 représente des blocs représentatifs d'un ensemble de services selon l'exemple d'application de l'invention ; et
- la figure 7 est un bloc représentatif d'un service à composer selon l'exemple d'application de l'invention.

Afin de faciliter la compréhension de l'invention, la description est illustrée par une application concrète relative au domaine sémantique du cinéma. Les services Web S1 à S4 et Sg des figures 6 et 7 comprennent des informations sémantiques réparties en des concepts d'entrée et des concepts de sortie relatifs au domaine sémantique du cinéma. Ces concepts sont mis en relation selon des ontologies représentées aux figures 5a-5e. D'autres domaines que le cinéma peuvent être appliqués à l'invention.

En référence à la figure 2, une plateforme de composition de service Web PCS, tel qu'un serveur Web traitant des services Web selon une spécification Web sémantique, comprend une mémoire Mm, une unité de traitement équipée, par exemple, d'au moins un processeur PR piloté par des programmes d'ordinateur écrits dans une mémoire Mpg et correspondant à des algorithmes mettant en oeuvre le procédé de composition de service selon l'invention. Un module d'entrée ET et un module de sortie ST tels que des interfaces de communication sont respectivement disposés en entrée et en sortie de l'unité de traitement PR.

Un service Web client Sg à composer selon l'invention dans la plateforme de composition de service est requis par un terminal client qui transmet vers le module d'entrée ET un ensemble Ig de concept d'entrée connu du client et un ensemble Og de concept de sortie souhaité par le client, ces deux ensembles prédéterminés définissant le service Sg. Comme montré à la figure 7, le service Sg comprend des entrées I_{g,1} et I_{g,2} associées chacune respectivement aux concepts d'entrée " Emplacement " et " Parisien ", et comprend également des sorties O_{g,1} et O_{g,2} associées respectivement aux concepts de sortie " Cinéma " et "Film". Le terminal client peut également transmettre un identificateur du domaine sémantique associé.

La mémoire Mm de la plateforme PCS est, par exemple, une base de données contenant un ensemble SW de services disponibles, c'est-à-dire mis à la disposition d'un client, dont les concepts d'entrée et les concepts de sortie sont relatifs à un domaine sémantique spécifique et sont mis en relation les uns avec les autres selon un ensemble d'ontologies T mémorisé dans la mémoire Mm. Selon l'exemple d'application relatif au domaine sémantique du cinéma, l'ensemble SW comprend, entre autres, les services S1 à S4 représentés à la figure 6.

En réalité, l'ensemble de services disponibles SW comporte un très grand nombre de services.

La mémoire Mm comprend également un fichier FC contenant différents services composés SC₁ à SC_{P} déterminés après exécution du procédé de l'invention et transmis au terminal client depuis le module de sortie ST. L'un SCₚ de ces services composés, avec 1 ≤ p ≤ P, est sélectionné soit par l'unité de traitement PR, soit par le client suivant des conditions particulières, et correspond au service demandé Sg.

Un service composé est fondé sur un ou des services disponibles le composant. Lorsque le service composé issu de la composition comprend plusieurs services composants, le premier service dans le service composé a tous ses concepts d'entrée correspondant sémantiquement à des concepts d'entrée Ig souhaités par le client, et le dernier service composant dans le service composé a des concepts de sortie correspondant sémantiquement à tous les concepts de sortie Og souhaités par le client.

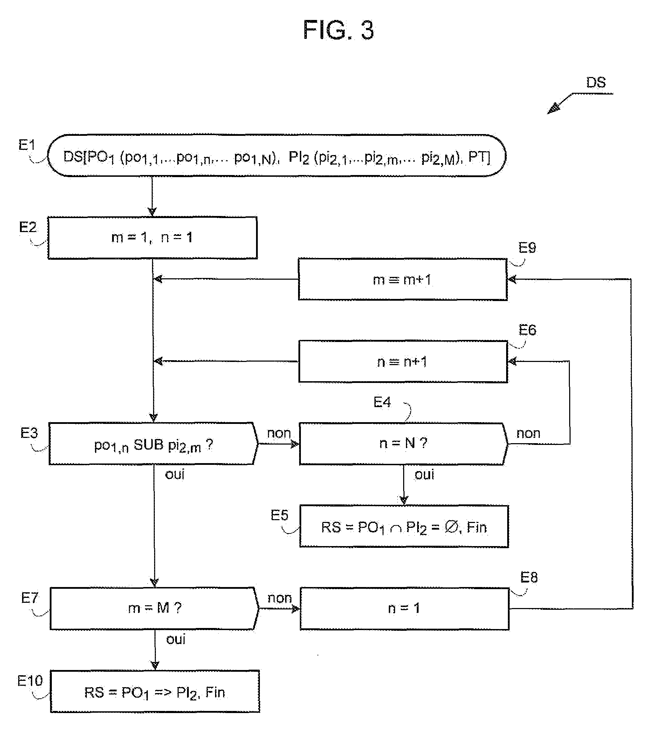

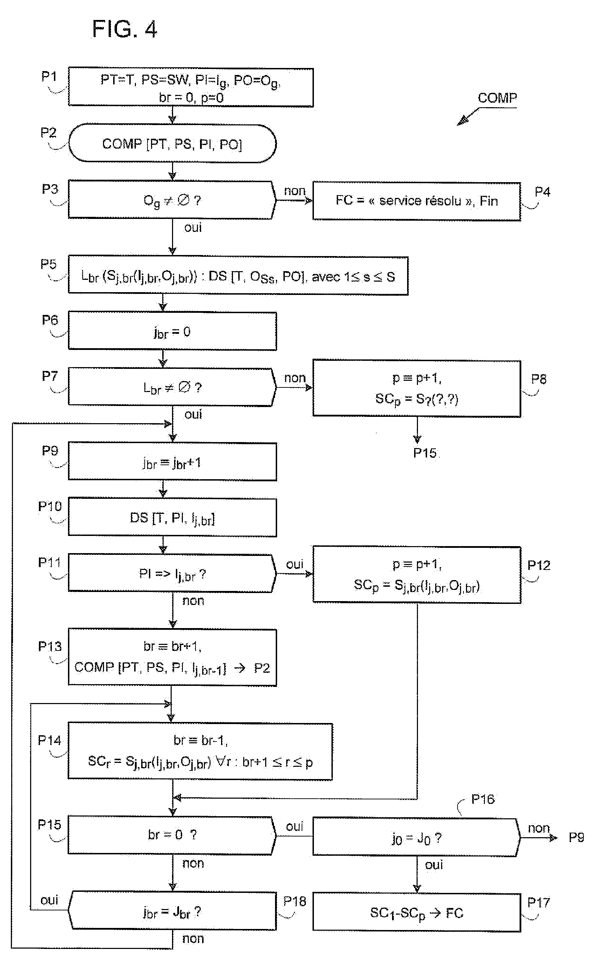

La mémoire Mpg comprend des algorithmes DS et COMP du procédé de composition de service selon l'invention, exécutés par l'unité de traitement PR et décrits plus en détail en référence aux figures 3 et 4.

L'algorithme DS teste la correspondance sémantique entre des concepts de sortie d'un premier service constituant un ensemble de sorties O₁ et tous les concepts d'entrée d'un deuxième service constituant un ensemble d'entrées I₂ selon l'ensemble d'ontologies T.

L'algorithme COMP établit un ou des services composés SCₚ, avec 1 ≤ p, à partir de l'ensemble de services SW et de l'ensemble d'ontologies T, en recourant à l'algorithme DS. Un service composé SCₚ correspond au service Sg à composer et comprend comme ensemble de concept d'entrée l'ensemble Ig transmis par le client et comme ensemble de concept de sortie l'ensemble Og également transmis par le client. Un service composé est une séquence ordonnée de services Web composants liés par correspondance sémantique. Dans un cas particulier, un service composé SCₚ peut inclure un seul service Web disponible.

En référence à la figure 3, l'algorithme DS comprend des étapes E1 à E10.

L'étape E1 définie des paramètres d'entrée de l'algorithme DS qui sont relatifs à un ensemble PO₁ de concepts de sortie po_{1,1}-po_{1,N} d'un premier service, un ensemble PI₂ de concepts d'entrée pi_{2,1}-pi_{2,M} d'un deuxième service et un ensemble PT des ontologies reliant les différents ensembles PO₁ et PI₂ de concepts. En exécutant l'algorithme DS, l'unité de traitement PR teste la correspondance sémantique entre les concepts de sortie po_{1,1}-po_{1,N} et les concepts d'entrée pi_{2,1}-pi_{2,M}. Les valeurs des paramètres PO₁, PI₂ et PT sont attribuées dans l'algorithme COMP lors de l'appel à l'algorithme DS.

A l'étape E2, les indices n et m des concepts po_{1,n} et pi_{1,m} avec 1 ≤ n ≤ N et 1 ≤ m ≤ M sont initialisés, par exemple à "1", afin de débuter un test de correspondance sémantique entre les deux premiers concepts d'entrée et de sortie po_{1,1} et pi_{1,1}.

Dans une boucle d'étapes itératives E3 à E6, l'unité de traitement PR teste la correspondance sémantique entre un concept d'entrée pi_{2,m} et un concept de sortie po_{1,n} et incrémente l'indice n d'une unité à l'étape E6. Si le concept de sortie po_{1,n} n'est pas subsumé (opérateur SUB) par le concept d'entrée pi_{2,m}, c'est-à-dire si le concept de sortie po_{1,n} ne correspond pas sémantiquement au concept d'entrée pi_{2,m}, à l'étape E3, et si tous les concepts de sortie n'ont pas encore été comparés au concept d'entrée pi_{2,m}, c'est-à-dire si l'indice n est inférieur à N à l'étape E4, alors un autre concept de sortie po_{1,n+1} est comparé au concept d'entrée pi_{2,m}, dans une nouvelle itération de la boucle E3 à E6.

Aux étapes E3 et E4, si tous les concepts de sortie po_{1,1}-po_{1,N} ont été comparés au concept d'entrée pi_{2,m} et qu'aucun concept de sortie n'est subsumé par le concept pi_{2,m}, alors l'algorithme DS délivre un résultat booléen RS = PO₁ ∩ PO₂ = Ø indiquant qu'aucune correspondance sémantique ne lie l'ensemble PO₁ des concepts de sortie du premier service à l'ensemble PI₂ des concepts d'entrée du deuxième service. L'unité de traitement PR arrête l'algorithme DS, ce qui est indiqué par "Fin" à l'étape E5.

Si à l'étape E3 le concept de sortie po_{1,n} est subsumé par le concept d'entrée pi_{2,m} et que d'autres concepts d'entrée sont à tester, c'est-à-dire si l'indice m est inférieur à M à l'étape E7, l'unité de traitement PR exécute au plus N nouvelles boucles itératives E3 à E6 pour tester la correspondance sémantique entre tous les concepts de sortie po_{1,1} à po_{1,N} et un autre concept d'entrée pi_{2,m+1}. En d'autres termes, l'unité PR initialise à "1" l'indice n des concepts de sortie à l'étape E8, et incrémente d'une unité l'indice m relatif aux concepts d'entrée à l'étape E9.

Si tous les concepts d'entrée pi_{2,1}-pi_{2,M} du deuxième service sont subsumés par des concepts de sortie de l'ensemble PO₁ du premier service à l'étape E7, l'algorithme produit un résultat booléen RS = PO₁ => PI₂ indiquant que l'ensemble PI₂ de concepts d'entrée du deuxième service correspond sémantiquement à l'ensemble PO₁ de concepts de sortie du premier service. L'unité de traitement termine l'algorithme DS, indiqué par "Fin" à l'étape E10.

A l'étape E3, le test de correspondance sémantique entre un concept d'entrée pi_{2,m} et un concept de sortie po_{1,n} est une subsomption SUB et est relative à la taxonomie de l'ontologie T. Le concept de sortie po_{1,n} est dit subsumé par le concept d'entrée pi_{2,m}, lorsque le concept d'entrée pi_{2,m} accepte une signification plus large que le concept de sortie po_{1,n} et l'inclut. Par exemple en référence à la taxonomie représentée à la figure 5a, le concept d'entrée pi_{2,m} : "Cinéma" subsume le concept de sortie po_{1,n} : "Cinéma commercial". La réciproque n'est pas vraie : le concept po_{1,n} : "Cinéma" ne subsume pas le concept pi_{2,m} : "Cinéma commercial" qui est un concept plus spécifique.

Un ensemble O₁ de N concepts de sortie d'un premier service est subsumé par un ensemble I₂ de M concepts d'entrée d'un deuxième service, avec quels que soient les entiers M et N, soit M = N, ou M < N, ou M > N.

En référence à la figure 4, l'algorithme COMP relatif à la composition d'un service composé client Sg et exécuté par l'unité de traitement PR comprend des étapes P1 à P18.

L'algorithme COMP détermine au moins un service composé SCₚ de services Web ordonnés, mémorisé dans un fichier FC. Chaque service Web disponible composant le service composé SCₚ est sélectionné dans une récurrence br d'une boucle récursive parmi des services Web disponibles de l'ensemble SW, la sélection se faisant de manière décroissante du dernier service au premier service composant le service composé. Le dernier service Web du service composé est d'abord sélectionné lors de la première récurrence br = 0 de la boucle récursive en fonction des ensembles de concept d'entrée Ig et de concept de sortie Og transmis par le client. Les autres services Web composant le service composé sont sélectionnés successivement lors d'exécutions de récurrences croissantes de la boucle récursive. Chaque autre service composant est sélectionné en fonction de l'ensemble de concept d'entrée Ig transmis par le client et de l'ensemble de concept d'entrée du service sélectionné lors de la récurrence précédente br-1 de la boucle récursive. Dès que l'ensemble de concept d'entrée du service sélectionné correspond sémantiquement à l'ensemble Ig, le service sélectionné est considéré comme le premier service composant le service composé. Les services composants le service composé sont ensuite ordonnancés du dernier service sélectionné correspondant au premier service du service composé au premier service sélectionné correspondant au dernier service du service composé. Plusieurs services composés peuvent être établis pour les mêmes ensembles Ig et Og et mémorisés dans le fichier FC. Un service composé peut comprendre également un seul service Web disponible.

L'étape P2 de l'algorithme définit des paramètres d'entrée de l'algorithme COMP qui sont : PT un ensemble d'ontologie du domaine sémantique traité, PS un ensemble de service disponible connu, PI un ensemble de concept d'entrée définissant le service à composer, et PO un ensemble de concept de sortie définissant le service à sélectionner.

Les paramètres PT, PS, PI et PO sont initialisés, à l'étape P1, à la réception par le module d'entrée ET de données transmises par le terminal du client souhaitant obtenir en retour un service Sg. Les données contiennent, entre autres, l'ensemble Ig de concept d'entrée attribué au paramètre PI de l'algorithme COMP et l'ensemble Og de concept de sortie attribué au paramètre PO dans la boucle récursive initiale br = 0 de l'algorithme COMP. Le paramètre PT est initialisé à l'ensemble d'ontologie T inclus dans la mémoire Mm, et le paramètre PS est initialisé à l'ensemble de service SW inclus dans la mémoire Mm. Egalement à l'étape P1, l'indice p est un pointeur différenciant chaque service composé SCₚ déterminé, et est initialisé à 0.

A l'étape P3, l'unité de traitement PR vérifie que l'ensemble PO de concept de sortie n'est pas vide. Si l'ensemble PO est vide, l'unité de traitement PR enregistre dans le fichier FC une note indiquant que "le service est résolu" puisqu'aucun concept de sortie Og n'est demandé, et termine l'algorithme COMP comme indiqué par "Fin", à l'étape P4.

Dans le cas contraire, si l'ensemble PO n'est pas vide, l'unité de traitement PR crée une liste L_{br} initialement vide qui comprend des services S_{1,br} à S_{J,br} de l'ensemble PS = SW, à l'étape P5. A chaque appel de boucle récursive br, une nouvelle liste L_{br} est créée et comprend ou non d'autres services S_{1,br} à S_{J,br}. Pour chaque service Web disponible Sₛ dans l'ensemble SW, avec 1 ≤ s ≤ S, l'unité de traitement PR fait appel à l'algorithme DS pour tester la correspondance sémantique entre l'ensemble de concept de sortie O_{Ss} du service Sₛ et l'ensemble de concept PO. Les paramètres d'entrée de l'algorithme DS sont : PT = T l'ensemble d'ontologie, PO₁ = O_{Ss} l'ensemble de concept de sortie du service Sₛ, et PI₂ = PO l'ensemble de concept qui est, dans la récurrence initiale br = 0 de la boucle récursive, l'ensemble O_{g} de concept de sortie considéré dans ce cas comme un ensemble de concept d'entrée d'un autre service. Pour chaque service Sₛ testé, si tous les concepts de sortie de l'ensemble PO correspondent sémantiquement aux concepts de sortie du service Sₛ, c'est-à-dire subsument les concepts de sortie du service Sₛ, alors le service Sₛ est enregistré dans la liste L_{br}. Ainsi pour la récurrence initiale br = 0, l'ensemble de concept de sortie Og souhaité par le client est satisfait par tous les services S_{1,0} à S_{J,0} de la liste L₀.

A l'étape P7, l'unité de traitement PR vérifie le contenu de la liste L_{br}. Si la liste L_{br} est vide, à l'étape P8, l'unité de traitement PR incrémente d'une unité l'indice p et intègre dans le service composé SCₚ un premier service Web abstrait S_{?}(?,?) indiquant que le service composé n'a pas de solution dans ce contexte. Puis, l'unité de traitement continue l'exécution de l'algorithme COMP à l'étape P15.

A l'étape P7, si la liste L_{br} n'est pas vide, l'unité de traitement PR incrémente l'indice j_{br} pour sélectionner le service S_{j,br} parmi les J_{br} services Web dans la liste L_{br} à l'étape P9, l'indice j_{br} étant mis précédemment à 0 à l'étape P6. A l'étape P10, l'unité de traitement PR fait appel à l'algorithme DS pour tester la correspondance sémantique entre l'ensemble I_{j,br} de concept d'entrée du service S_{j,br} sélectionné et l'ensemble PI relatif à l'ensemble de concept d'entrée Ig souhaité par le client. Les paramètres d'entrées de l'algorithme DS sont : PT = T l'ensemble d'ontologie, PO₁ = PI l'ensemble de concept d'entrée du service Sg, et PI₂ = I_{j,br}.

Dans le cas le plus simple, à l'étape P11, si le résultat RS de l'algorithme DS indique que l'ensemble I_{j,br} correspond sémantiquement à l'ensemble PI, l'unité de traitement PR incrémente d'une unité l'indice p et intègre dans le nouveau service composé SCₚ le service Web S_{j,br} sélectionné en tant que premier service du service composé, à l'étape P12.

Dans le cas contraire à l'étape P11, si le résultat RS de l'algorithme DS indique que l'ensemble I_{j,br} ne correspond pas sémantiquement à l'ensemble PI, l'indice de récursivité br est incrémenté d'une unité, et l'unité de traitement PR appelle récursivement l'algorithme COMP à partir de l'étape P2 en fonction des paramètres d'entrée : PT = PT, PS = PS, PI = PI et PO = I_{jbr-1}, à l'étape P13. En d'autres termes, seul le paramètre PO change et concerne l'ensemble de concept de sortie du service à sélectionner dans la nouvelle récurrence br correspondant à l'ensemble de concept d'entrée I_{jbr-1} du service sélectionné lors de la récurrence précédente br-1. L'algorithme COMP est à nouveau exécuté avec des paramètres d'entrée différents, et une autre liste L_{br} est créée à l'étape P5 dont le contenu est vérifié à l'étape P7. La fin de la récursivité prend effet lorsque l'unité de traitement exécute l'étape P7 ou P14 et crée un service composé Scₚ par incrémentation de l'indice p et insertion d'un premier service abstrait S_{?}, ou précédemment sélectionné S_{j,br} à l'étape P11 de la récurrence courante br.

Aux étapes P15 et P18, si l'indice de récursivité br n'est pas nul et si tous les J_{br} services de la liste L_{br} ont été sélectionnés, l'unité de traitement PR termine la récurrence courante, à l'étape P18, et s'oriente vers la récurrence précédente br-1, à l'étape P14. L'unité de traitement PR décrémente d'une unité l'indice de récursivité br et insère le service Web S_{j,br} sélectionné dans le ou les services SCᵣ composés à des étapes précédentes P8 et/ou P12, pour tout indice r compris entre les valeurs br+1 et p. Ainsi, l'unité de traitement insère un service identique S_{j,br} pour tous les services composés ayant une partie de premiers services composants différents depuis l'ensemble de concept d'entrée Ig du service composé client Sg, et ayant un ou des derniers services composants identiques vers l'ensemble de concept de sortie Og du service Sg.

Aux étapes P15 et P16, si l'indice de récursivité br est nul et si tous les services de la liste L₀ ont été sélectionnés, l'unité de traitement PR mémorise le ou les services composés Sc₁ à Scₚ dans le fichier FC à l'étape P17. L'unité PR arrête l'algorithme COMP.

Aux étapes P16 et P18, si des services de la liste L_{br} n'ont pas encore été sélectionnés, l'unité de traitement PR retourne à l'étape P9 et sélectionne un autre service de la liste L_{br} en incrémentant d'une unité l'indice j_{br}. Cette nouvelle sélection implique la composition d'un nouveau service composé à l'étape P8 ou à l'étape P12, par incrémentation d'une unité de l'indice p.

A l'étape P9, la sélection des services d'un service composé se fait de manière décroissante du dernier service au premier service du service composé par incrémentation de l'indice de récursivité br. Inversement, l'insertion ordonnée des services dans le service composé se fait de manière croissante du premier service, aux étapes P8 ou P12, vers le dernier service du service composé par décrémentation de l'indice de récursivité br à l'étape P14.

Avant d'enregistrer le fichier FC dans la mémoire Mm, l'unité de traitement supprime les services composés ne contenant pas de solution, c'est-à-dire les services composés dont le premier service est un service abstrait S_{?}.

Avant de transmettre le fichier FC au terminal client depuis l'entité de sortie ST, l'unité de traitement PR peut présélectionner les services composés à transmettre au client, par exemple les services composés comportant un nombre minimal de services Web composants.

Dans l'exemple d'application relatif au domaine sémantique du cinéma, les données définissant le service composé client Sg et reçues par l'entité ET sont: Ig = "Emplacement", "Parisien", et Og = "Cinéma", "Film". L'ensemble de service SW comprend S services dont les services S1 à S4 représentés à la figure 6. Les concepts d'entrée et de sortie des services S1, S2, S3 et S4 sont:
I_{S1} = "Emplacement" ;
O_{S1} = "Prix d'une séance étudiante" ;
I_{S2} = "Nationalité française", "Emplacement" ;
O_{S2} = "Cinéma français", "Film français" ;
I_{S3} = "Prix d'une séance" ;
O_{S3} = "Cinéma commercial", "Film commercial" ;
I_{S4} = "Nationalité italienne", "Emplacement" ;
O_{S4} = "Cinéma italien", "Film italien".

L'ensemble d'ontologie T reliant les différents concepts de ces services est représenté aux figures 5a à 5e.

Dans la récurrence initiale br = 0, à l'étape P2, l'unité de traitement fait appel à l'algorithme COMP [T, SW, Ig, Og], et vérifie, à l'étape P3, le contenu de l'ensemble PO : PO = "Cinéma", "Film" n'étant pas vide.

A l'étape P5, l'unité de traitement recherche dans l'ensemble SW les services dont les ensembles de concept de sortie sont subsumés par l'ensemble de concept de sortie Og et crée ainsi la liste L₀ = S2, S3, S4, par S appels itératifs de l'algorithme DS. Le service S1 est exclu de la liste L₀ puisque son concept de sortie n'est pas subsumé dans l'ensemble Og.

A l'étape P9, l'unité de traitement sélectionne le premier service S2 de la liste L₀ et procède au test de correspondance sémantique en appelant l'algorithme DS[T, Ig, I_{S2}], à l'étape P10. L'algorithme DS retourne à l'étape P11, un résultat indiquant que l'ensemble Ig correspond sémantiquement à l'ensemble I_{S2}. L'unité de traitement PR compose un service composé SC₁ et y insère le service S2 : SC₁ = S2, à l'étape P12.

Aux étapes P15 et P16, l'indice de récursivité br est nul et des services de la liste L₀ n'ont pas été sélectionnés. L'unité de traitement PR retourne alors à l'étape P9 pour sélectionner le deuxième service S3 de la liste L₀. L'unité de traitement PR procède au test de correspondance sémantique en appelant l'algorithme DS[T, Ig, I_{S3}], à l'étape P10. L'algorithme DS retourne à l'étape P11, un résultat indiquant que l'ensemble I_{g} ne correspond pas sémantiquement à l'ensemble I_{S3}.

A l'étape P13, l'unité de traitement incrémente d'une unité l'indice de récursivité, soit br = 1, et fait appel à l'algorithme COMP [T, SW, Ig, I_{S3}] -

A l'étape P5, l'unité de traitement crée la liste L₁ qui est composée seulement par le service S1 dont l'ensemble de concept de sortie est subsumé par l'ensemble de concept d'entrée du service S3.

A l'étape P9, l'unité de traitement sélectionne le premier service S1 de la liste L₁ et procède au test de correspondance sémantique en appelant l'algorithme DS[T, Ig, I_{S1}], à l'étape P10. L'algorithme DS produit à l'étape P11 un résultat indiquant que l'ensemble Ig correspond sémantiquement à l'ensemble I_{S1}. L'unité de traitement PR compose un service composé SC₂ et y insère le service S1 : SC₂ = S1, à l'étape P12.

Aux étapes P15 et P18, l'indice de récursivité br n'est pas nul et tous les services de la liste L₁ ont été sélectionnés. L'unité de traitement PR sort de la récurrence courante, à l'étape P18, et continue dans la récurrence précédente br = 0 pour ajouter dans le service composé SC₂ le service S3 : SC₂ = S1, S3, à l'étape P14.

Aux étapes P15 et P16, l'indice de récursivité br est nul et seul le service S4 de la liste L₀ n'a pas été sélectionné. L'unité de traitement PR retourne à l'étape P9 pour sélectionner le service S4. L'unité de traitement PR procède au test de correspondance sémantique en appelant l'algorithme DS[T, Ig, I_{S4}], à l'étape P10. L'algorithme DS produit à l'étape P11 un résultat indiquant que l'ensemble Ig ne correspond pas sémantiquement à l'ensemble I_{S4}.

A l'étape P13, l'unité de traitement incrémente d'une unité l'indice de récursivité br = 1 et fait appel à l'algorithme COMP [T, SW, Ig, I_{S4}]

A l'étape P5, l'unité de traitement crée la liste vide L₁. Puis à l'étape P8, l'unité de traitement PR crée un service composé SC₃ et y insère le service abstrait S_{?} : SC₃ = S_{?}.

Aux étapes P15 et P18, l'indice de récursivité br n'est pas nul et la liste L₁ est vide. L'unité de traitement PR sort de la boucle récursive courante, à l'étape P18, et continue la récurrence précédente br = 0 pour ajouter dans le service composé SC₃ le service S4 : SC₃ = (S_{?}, S4), à l'étape P14.

Aux étapes P15 et P16, l'indice de récursivité br est nul et tous les services de la liste L₀ ont été sélectionnés. L'unité de traitement PR mémorise les services composés SC₁ à SC₃ dans le fichier FC, à l'étape P17. L'unité PR a terminé l'algorithme COMP.

La plateforme PFC incorpore ou peut accéder localement ou à travers un réseau de télécommunications à une base de données du type de celles utilisées en intelligence artificielle. La plateforme PFC peut être un dispositif ou objet électronique de télécommunications personnel à l'utilisateur du procédé, par exemple un assistant numérique personnel communicant PDA. Il peut être également par exemple tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge.

L'invention décrite ici concerne un procédé et une plateforme de composition de service. Selon une implémentation, les étapes du procédé de l'invention sont déterminées par les instructions d'un programme d'ordinateur incorporé dans la plateforme, tel qu'un serveur. Le programme comporte des instructions de programme qui, lorsque ledit programme est exécuté dans un processeur de la plateforme dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

## Revendications

1. Procédé pour composer automatiquement un service composé Web (Sg) ayant des entrées et sorties prédéterminées (Ig, Og) à partir d'un ensemble (SW) de services composants Web (Sₛ) mémorisé dans une base de données (Mm) comprenant chacun au moins une entrée et au moins une sortie associées à des représentations textuelles, **caractérisé en ce qu'**il comprend une sélection (P6-P9) d'un service composant ayant des sorties correspondant sémantiquement à toutes les sorties prédéterminées (Og), une sélection (P9-P11) d'un service composant ayant toutes les entrées correspondant sémantiquement à des entrées prédéterminées (Ig), et une composition (P12, P14) du service composé (Sg) avec les services composants sélectionnés.

2. Procédé conforme à la revendication 1, selon lequel des sorties d'un service composant correspondent sémantiquement à toutes les sorties prédéterminées (Og) lorsque chacune desdites sorties du service composant sont subsumées par au moins l'une des sorties prédéterminées, et toutes les entrées d'un service composant correspondent sémantiquement à des entrées prédéterminées (Ig) lorsque chacune desdites toutes les entrées du service composant subsume au moins l'une des entrées prédéterminées.

3. Procédé conforme à la revendication 1 ou 2, selon lequel la composition du service composé (Sg) est une séquence ordonnée de plusieurs services composants sélectionnés parmi l'ensemble de services composants (SW), toutes les entrées du premier service composant du service composé correspondant sémantiquement à des entrées prédéterminées (Ig) du service composé, toutes les entrées de chacun des autres services composants du service composé correspondant sémantiquement à des sorties du service composant les précédant dans le service composé, et des sorties du dernier service composant du service composé correspondant sémantiquement à toutes les sorties prédéterminées (Og) du service composé.

4. Procédé conforme à la revendication 3, selon lequel la composition du service composé comprend :
une sélection (P9) par boucle récursive (br) de services composants (S_{j,br}), des sorties (O_{j,br}) de chaque service composant sélectionné dans une récurrence croissante de la boucle récursive correspondant sémantiquement aux entrées (I_{j,br-1}) du service composant (S_{j,br-1}) sélectionné lors de la récurrence précédente (br-1) de la boucle récursive, les sorties (O_{j,br}) du premier service composant sélectionné correspondant sémantiquement aux sorties prédéterminées (Og) du service composé (Sg),
une composition (P8, P12) du service composé (SCp) lorsque les entrées (I_{j,br}) du service composant sélectionné dans la dernière récurrence croissante de la boucle récursive correspondent sémantiquement à des entrées prédéterminées (Ig) du service composé (Sg), et
une insertion (P14) par récurrence décroissante (br-1) de la boucle récursive de chacun des services composants précédemment sélectionnés dans le service composé.

5. Procédé conforme à la revendication 3 ou 4, selon lequel toutes les entrées d'un service composant donné correspondent sémantiquement à des sorties d'un autre service composant le précédant dans le service composé lorsque chacune desdites toutes les entrées du service composant donné subsume au moins l'une des sorties de l'autre service composant.

6. Procédé conforme à l'une quelconque des revendications 1 à 5, comprenant une composition (COMP) de plusieurs services composés différents (SC₁-SCₚ) contenant chacun au moins un service composant (S_{j,br}), toutes les entrées de chaque service composé correspondant sémantiquement (E10) à des entrées prédéterminées (Ig) et des sorties de chaque service composé correspondant sémantiquement (E10) à toutes les sorties prédéterminées (Og).

7. Procédé conforme à l'une quelconque des revendications 1 à 6, **caractérisé en ce que** les entrées/sorties des services appartiennent à au moins une ontologie prédéfinie définissant des correspondances sémantiques.

8. Plateforme de composition automatique d'un service composé Web (Sg) ayant des entrées et sorties prédéterminées (Ig, Og) à partir d'un ensemble (SW) de services composants Web (S_{S}) mémorisé dans une base de données (Mm) comprenant chacun au moins une entrée et au moins une sortie associées à des représentations textuelles, **caractérisée en ce qu'**elle comporte un moyen (PR) pour sélectionner un service composant ayant des sorties correspondant sémantiquement à toutes les sorties prédéterminées (Og), un moyen (PR) pour sélectionner un service composant ayant toutes les entrées correspondant sémantiquement à des entrées prédéterminées (Ig), et un moyen (PR) pour composer le service composé (Sg) avec les services composants sélectionnés.

9. Programme d'ordinateur apte à être mis en oeuvre dans une plateforme de composition automatique d'un service composé Web (Sg) ayant des entrées et sorties prédéterminées (Ig, Og) à partir d'un ensemble (SW) de services composants Web (S_{S}) mémorisé dans une base de données (Mm) comprenant chacun au moins une entrée et au moins une sortie associées à des représentations textuelles, ledit programme étant **caractérisé en ce qu'**il comprend des instructions qui, lorsque le programme est chargé et exécuté dans ladite plateforme, réalisent les étapes conformes au procédé selon l'une des revendications 1 à 7.
